(19) **Europäisches Patentamt / European Patent Office / Office européen des brevets**

(11) **EP 4 355 990 B1**

(12) **FASCICULE DE BREVET EUROPEEN**

(45) Date de publication et mention de la délivrance du brevet:
**30.04.2025 Bulletin 2025/18**

(51) Classification Internationale des Brevets (IPC):
**F02C 7/26** *(2006.01)*    **F02C 7/262** *(2006.01)*
**F02C 7/268** *(2006.01)*

(21) Numéro de dépôt: **22735018.8**

(22) Date de dépôt: **09.06.2022**

(52) Classification Coopérative des Brevets (CPC):
**F02C 7/26; F02C 7/262; F02C 7/268;**
F05D 2260/85; F05D 2270/092; F05D 2270/304

(86) Numéro de dépôt international:
**PCT/FR2022/051103**

(87) Numéro de publication internationale:
**WO 2022/263750 (22.12.2022 Gazette 2022/51)**

(54) **SYSTÈME DE PROPULSION D'UN AÉRONEF AVEC DISPOSITIF DE COMMANDE DE DÉMARRAGE**

FLUGZEUGANTRIEBSSYSTEM MIT STARTSTEUERUNGSVORRICHTUNG

AIRCRAFT PROPULSION SYSTEM WITH START-UP CONTROL DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2021 FR 2106471**

(43) Date de publication de la demande:
**24.04.2024 Bulletin 2024/17**

(73) Titulaires:
• **SAFRAN**
**75015 Paris (FR)**
• **Safran Helicopter Engines**
**64510 Bordes (FR)**

(72) Inventeurs:
• **FERRAND, Antoine Pierre Emmanuel**
**77550 MOISSY-CRAMAYEL (FR)**
• **MERCIER-CALVAIRAC, Fabien**
**77550 MOISSY-CRAMAYEL (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
EP-A1- 2 006 496     WO-A1-2013/007912
WO-A1-2014/037649

**Description**

**Domaine technique de l'invention**

La présente invention concerne un système et un procédé de propulsion d'un aéronef, ainsi qu'un programme d'ordinateur pour la mise en œuvre du procédé.

**Arrière-plan technologique**

Le document FR 2 995 345 A1 décrit une turbine à gaz d'aéronef comprenant une chambre de combustion, un arbre de compresseur pour alimenter en air comprimé la chambre de combustion et un démarreur relié à l'arbre de manière à lui fournir un couple de démarrage suffisant pour l'entraîner en rotation. Le document décrit également les phases de démarrage nécessaires au démarrage de la turbine à gaz qui comportent une phase dite de pré-accélération durant laquelle le démarreur est activé pour entraîner l'arbre en rotation suivie d'une phase dite de stabilisation durant laquelle la vitesse de rotation de l'arbre est maintenue à un palier. Cette phase de stabilisation correspond à une temporisation durant laquelle les différents équipements d'allumage de la chambre de combustion sont activés pour être prêts à être utilisés. Ces phases ont la particularité d'être réalisées lorsque l'arbre de compresseur tourne à bas régime, c'est-à-dire avec une faible vitesse de rotation. Une fois la vitesse de rotation de l'arbre stabilisée, une tentative d'allumage de la chambre de combustion par les équipements d'allumage activés est réalisée. En cas de succès de l'allumage, l'arbre est accéléré jusqu'à atteindre un haut régime, c'est-à-dire de hautes vitesses de rotation.

L'état de la technique comprend également les documents WO 2013/007912 A1 et EP 2 006 496 A1 qui décrivent des méthodes de démarrage d'une turbine à gaz d'aéronef.

L'invention propose un perfectionnement à ces technologies, qui permet notamment de compléter la stratégie de démarrage d'une turbine à gaz en proposant un système de propulsion améliorant le temps et les chances de démarrage.

**Résumé de l'invention**

Il est donc proposé un système de propulsion d'un aéronef comportant :

- une turbine à gaz comprenant : une chambre de combustion, un dispositif d'allumage de la chambre de combustion, un compresseur d'alimentation en air de la chambre de combustion, le compresseur étant muni d'un arbre de compresseur, et un démarreur électrique d'entraînement de l'arbre de compresseur, la turbine à gaz étant conçue de sorte que la chambre de combustion puisse être allumée par le dispositif d'allumage dans une première plage d'allumage de vitesses de rotation de l'arbre de compresseur ;
- un dispositif de commande de démarrage conçu pour : alors que la chambre de combustion est éteinte, commander le démarreur électrique pour accélérer l'arbre de compresseur, et avec l'arbre de compresseur accéléré, commander le dispositif d'allumage pour tenter un allumage de la chambre de combustion ;

caractérisé en ce que, la turbine à gaz étant conçue de sorte que la chambre de combustion puisse en outre être allumée par le dispositif d'allumage dans une deuxième plage d'allumage de vitesses de rotation de l'arbre de compresseur, supérieure à la première plage d'allumage, mais pas entre ces deux plages d'allumage, le dispositif de commande est conçu, lors de l'accélération de l'arbre de compresseur, pour accélérer ce dernier jusqu'à la deuxième plage d'allumage pour tenter l'allumage de la chambre de combustion dans cette dernière.

Ainsi, grâce à l'invention, le temps de démarrage peut être diminué, en s'affranchissant d'une phase de stabilisation, ou temporisation de la vitesse de rotation.. En effet, durant la phase d'accélération jusqu'à haut régime, chambre de combustion éteinte, les différents équipements d'allumage tels que le dispositif d'allumage ou bien un ou des injecteur(s) de carburant peuvent être activés de sorte à être déjà prêts à être utilisés lorsque la deuxième plage d'allumage est atteinte. Encore grâce à l'invention, la fiabilité et la reproductibilité du démarrage est amélioré, les problématiques d'opérabilité comme par exemples les risques de sur-températures, étant supprimées.

Le système selon l'invention peut comprendre une ou plusieurs des caractéristiques ci-dessous

- la deuxième plage d'allumage présente une borne inférieure au moins égale à 40% d'une vitesse nominale de rotation de l'arbre de compresseur ;

- la première plage d'allumage présente une borne supérieure valant au plus 30% de la vitesse nominale de rotation de l'arbre de compresseur ;

- le dispositif de commande est conçu, en cas d'échec de la tentative d'allumage, pour :

- faire décélérer l'arbre de compresseur, jusqu'à atteindre la première plage d'allumage ; et

- avec la vitesse de rotation dans la première plage, commander le dispositif d'allumage pour tenter un allumage de la chambre de combustion ;

- le dispositif de commande est conçu pour commander le démarreur électrique et le dispositif d'allumage en réponse à une extinction de la chambre de combustion et à la détection que la vitesse de rotation passe en-dessous de la deuxième plage d'allumage ;

- le dispositif de commande est configuré pour déterminer une borne inférieure de la deuxième plage d'allumage à partir d'au moins un paramètre d'environnement atmosphérique de la turbine à gaz.

L'invention concerne également un aéronef comprenant un système de propulsion selon l'invention.

L'invention concerne également un procédé de démarrage d'une turbine à gaz d'un aéronef, comportant :

- alors qu'une chambre de combustion de la turbine à gaz est éteinte, la commande d'un démarreur électrique de la turbine à gaz pour accélérer un arbre de compresseur entraînant un compresseur d'alimentation en air de la chambre de combustion ; et

- avec l'arbre de compresseur accéléré, la commande d'un dispositif d'allumage de la turbine à gaz pour tenter un allumage de la chambre de combustion ;

caractérisé en ce que, la turbine à gaz étant conçue de sorte que la chambre de combustion puisse être allumée par le dispositif d'allumage dans une première plage d'allumage et dans une deuxième plage d'allumage de vitesses de rotation de l'arbre de compresseur, la deuxième plage d'allumage étant supérieure à la première plage d'allumage, mais pas entre ces deux plages d'allumage, l'arbre de compresseur est accéléré jusqu'à la deuxième plage d'allumage pour tenter l'allumage de la chambre de combustion dans cette dernière.

Le procédé selon l'invention peut comprendre la caractéristique suivante :

- une borne inférieure de la deuxième plage d'allumage est préalablement déterminée par essai sur la turbine à gaz ou bien par simulation de la turbine à gaz.

L'invention concerne également un programme d'ordinateur téléchargeable depuis un réseau de communication et/ou enregistré sur un support lisible par ordinateur, caractérisé en ce qu'il comprend des instructions pour l'exécution d'un procédé de démarrage selon l'invention, lorsque le programme d'ordinateur est exécuté dans un dispositif de commande selon l'invention.

## Brève description des figures

L'invention sera mieux comprise à l'aide de la description qui va suivre, donnée uniquement à titre d'exemple et faite en se référant aux dessins annexés dans lesquels :

[Fig. 1] la figure 1 est une vue très schématique d'un système de propulsion d'un aéronef avec son dispositif de commande de démarrage, selon l'invention,

[Fig. 2] la figure 2 est un schéma-bloc d'un exemple de procédé de détermination de seuils d'allumage pour la vitesse de rotation selon l'invention,

[Fig. 3] la figure 3 est un schéma-bloc d'un premier exemple de procédé de démarrage selon l'invention,

[Fig. 4] la figure 4 est un schéma-bloc d'un deuxième exemple de procédé de démarrage selon l'invention, dans le cas d'une extinction préalable de la turbine à gaz,

[Fig. 5] la figure 5 est un diagramme représentant l'évolution d'un paramètre de charge aérodynamique en fonction d'une vitesse de rotation d'un arbre de compresseur du système de propulsion selon l'invention,

[Fig. 6] la figure 6 est un diagramme représentant les phases de démarrage d'une turbine à gaz d'un aéronef équipé du système selon l'invention, et

[Fig. 7] la figure 7 est un diagramme représentant les phases de démarrage d'une turbine à gaz d'un aéronef équipé du système selon l'invention, dans le cas d'une extinction préalable de la turbine à gaz.

**Description détaillée de l'invention**

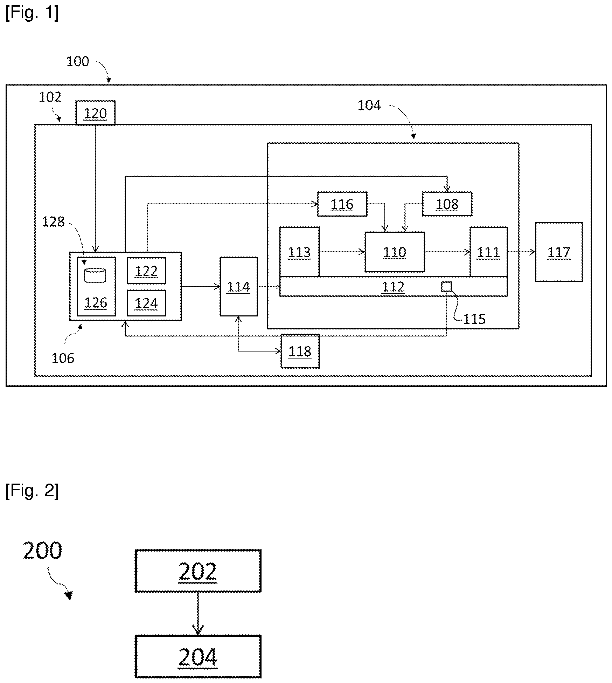

La figure 1 illustre un exemple d'un système de propulsion 100 d'un aéronef selon l'invention comprenant une turbine à gaz 102 et un dispositif de commande 106 de démarrage de la turbine à gaz 102.

La turbine à gaz 102 comprend un générateur de gaz 104 comportant une chambre de combustion 110 et un injecteur 116 de combustible dans la chambre de combustion 110. Dans cette dernière, de l'air sous pression est destiné à être introduit pour se mélanger au combustible afin de réaliser une combustion. Le générateur de gaz 104 comporte en outre un dispositif d'allumage 108 de la chambre de combustion 110 conçu pour initier la combustion.

Afin d'élever la pression de l'air destiné à être introduit dans la chambre de combustion 110, le générateur de gaz 104 comporte en outre un compresseur 113 conçu pour alimenter en air sous pression la chambre de combustion 110.

Pour entraîner le compresseur 113, le générateur de gaz 104 comporte en outre une turbine 111 et un arbre mécanique, dit arbre de compresseur 112, reliant le compresseur 113 à la turbine 111. La turbine 111 est conçue pour être entraînée en rotation par les gaz résultant de la combustion dans la chambre de combustion 110 et ainsi pour entraîner en rotation l'arbre de compresseur 112 à une vitesse de rotation $N_{GG}$. Le compresseur 113 est ainsi entrainé par l'arbre de compresseur 112.

Le système de propulsion 100 comporte par exemple un capteur 115 qui permet par exemple de mesurer cette vitesse de rotation $N_{GG}$.

Le surplus d'énergie thermique généré à la sortie du générateur de gaz 104 peut être récupéré par un organe 117 du système de propulsion 100. Cet organe 117 peut être une tuyère pour la génération de poussée, une turbine libre ou liée pour la génération d'énergie mécanique pour entraîner un rotor ou une hélice ou encore un générateur électrique.

Au démarrage, l'énergie thermique en sortie de la chambre de combustion 110 est insuffisante pour entraîner la turbine 111 avec l'arbre de compresseur 112. Pour pallier cela, la turbine à gaz 102 comporte en outre une machine électrique 114 (par exemple réversible) pouvant être pilotée en mode moteur pour l'entraînement de l'arbre de compresseur 112, la machine électrique 114 ayant alors une fonction de démarreur. Dans ce qui suit, la machine électrique 114 est nommée démarreur électrique 114.

Le démarreur électrique 114 est relié à l'arbre de compresseur 112 et permet d'apporter un couple à l'arbre de compresseur 112 pour l'entraîner en rotation. L'assistance par le démarreur électrique 114 permet en outre de vaincre l'ensemble des couples résistifs des parties mises en rotation.

Lorsqu'elle est réversible, la machine électrique 114 peut également avoir un mode alternateur dans lequel elle peut prélever du couple à l'arbre de compresseur 112 et ainsi devenir un générateur électrique.

Pour alimenter électriquement le démarreur électrique 114, la turbine à gaz 102 comporte, par exemple, un dispositif de stockage électrique 118 relié au démarreur électrique 114. Le dispositif de stockage électrique 118, par exemple une ou des batteries, est conçu pour délivrer de fortes puissances afin de permettre au démarreur électrique 114 d'entraîner l'arbre de compresseur 112 en rotation. Le dispositif de stockage 118 peut être rechargé par le démarreur électrique 114 lorsque celui-ci est en mode alternateur.

Le dispositif de stockage 118 peut être configuré pour délivrer une puissance pouvant atteindre entre 1 et 15% d'une puissance totale délivrée par la turbine à gaz 102 lorsque celle-ci est à 100% de son régime nominal (dans des conditions atmosphériques standards au sol), et avantageusement entre 5 et 11% de cette puissance totale.

Le système de propulsion 100 comporte en outre un système de mesure 120 conçu pour mesurer un ou plusieurs paramètres d'environnement atmosphérique de la turbine à gaz 102 et pour fournir les mesures au dispositif de commande 106.

Le dispositif de commande 106 est par exemple conçu pour recevoir les mesures du système de mesure 120 et du capteur 115 de vitesse de rotation de l'arbre de compresseur 112.

Dans l'exemple décrit, le dispositif de commande 106 comporte un système informatique comportant une unité de traitement 122 de données (telle qu'un microprocesseur) et une mémoire principale 124 accessible par l'unité de traitement 122. Ce système informatique comporte en outre un programme d'ordinateur 128 contenant des instructions pour l'unité de traitement 122. Ce programme d'ordinateur 128 est par exemple destiné à être chargé dans la mémoire principale 124, en une fois ou bien par partie, afin que l'unité de traitement 122 exécute ses instructions.

Préalablement à son chargement dans la mémoire principale 124, le programme d'ordinateur 128 est par exemple enregistré sur un support 126 adapté à cet effet (tel qu'une mémoire de masse locale comme un disque dur) et/ou téléchargé via une interface réseau du système informatique.

Par exemple, ce système informatique est un calculateur embarqué de type ECU (de l'anglais « Electronic Control Unit »).

Les instructions du programme d'ordinateur 128 sont conçues pour que, lorsqu'exécutées par l'unité de traitement 122 de données, le dispositif de commande 106 réalise les étapes qui seront décrites plus loin.

Alternativement, tout ou partie de ces étapes peut être réalisé par des circuits électroniques, par exemple micro-câblés, ne faisant pas intervenir de programme d'ordinateur.

Le dispositif de commande 106 comporte une mémoire, telle que la mémoire 124, dans laquelle sont enregistrées des données définissant en particulier des seuils n1, n2 pour la vitesse de rotation $N_{GG}$ de l'arbre de compresseur 112. Ces données seront décrites plus en détail par la suite.

La figure 2 illustre un exemple de procédé 200, selon l'invention, de détermination des seuils n1, n2 pour la vitesse de rotation $N_{GG}$ de l'arbre de compresseur 112. Ce procédé 200 est par exemple mis en œuvre lors de la conception de la turbine à gaz 102.

En effet, la capacité de la chambre de combustion 110 à brûler le carburant introduit est exprimée par une charge aérodynamique $\Omega$ qui dépend de l'environnement atmosphérique dans lequel la turbine à gaz 102 est supposée fonctionner (cet environnement atmosphérique étant caractérisé par exemple par une pression extérieure P0 et/ou une température extérieure T0 à la turbine à gaz 102) et de la vitesse de rotation de l'arbre de compresseur 112. La charge aérodynamique $\Omega$ permet ainsi d'évaluer les performances de la chambre de combustion 110.

La courbe de la charge aérodynamique $\Omega$ dépend de l'architecture de la turbine à gaz 102 considérée, qui définit, entre autres, le temps de séjour des gaz dans la chambre de combustion 110 ainsi que la vitesse des réactions de combustion. Autrement dit, la courbe de la charge aérodynamique $\Omega$ est spécifique à chaque modèle de turbine à gaz.

Par exemple, la charge aérodynamique $\Omega$ considérée est équivalente à la charge de la chambre de combustion (« combustor loading » en anglais) donnée dans l'ouvrage Gas Turbine Performance, Walsh, P.P. and Fletcher, P., Blackwell Science, Oxford (1998). Ainsi, la charge aérodynamique $\Omega$ est par exemple donnée par l'équation suivante :

[Math. 1]

$$\Omega = \frac{W_{32}}{VOL.P_{32}^{1.8}.10^{0.00145.T_{32}}}$$

où VOL est le volume de la chambre de combustion 110, $P_{32}$ et $T_{32}$ sont respectivement la pression et la température d'entrée des gaz dans la chambre de combustion 110, et $W_{32}$ est le débit massique d'entrée des gaz dans la chambre de combustion 110.

Le volume VOL de la chambre de combustion 110 est un paramètre de conception de la turbine à gaz 102, tandis que la pression $P_{32}$, la température $T_{32}$ et le débit $W_{32}$ dépendent de la conception de la turbine à gaz 102, mais également de son environnement atmosphérique et de la vitesse de rotation $N_{GG}$ de l'arbre de compresseur 112.

Dans l'exemple décrit, la norme ISA (de l'anglais « International Standard Atmosphere ») est utilisée pour la définition de l'environnement atmosphérique. Cette norme ISA associe à chaque altitude une température et une pression prédéfinies. Ainsi, dans l'exemple décrit, l'environnement atmosphérique est complètement défini par l'altitude H. Ainsi, la charge aérodynamique $\Omega$ est une fonction de l'altitude H et de la vitesse de rotation $N_{GG}$ de l'arbre de compresseur 112.

Alternativement, la charge aérodynamique $\Omega$ est en outre définie en fonction d'un écart entre la température ISA à cette altitude H et la température extérieure T0 mesurée. Ainsi, dans cette alternative, la charge aérodynamique $\Omega$ est une fonction de l'altitude H, de l'écart à la température ISA à cette altitude H et de la vitesse de rotation $N_{GG}$ de l'arbre de compresseur 112.

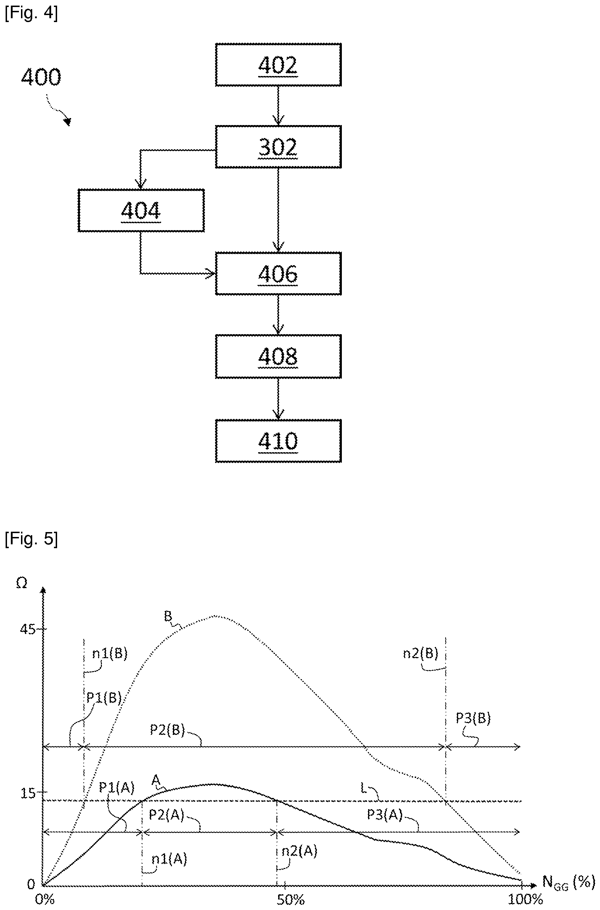

La figure 5 montre deux courbes A, B de charge aérodynamique $\Omega$ de la chambre de combustion 110 en fonction de la vitesse de rotation $N_{GG}$ de l'arbre de compresseur 112, pour respectivement deux environnements atmosphériques définis par la norme ISA : le premier lorsque l'altitude H est nulle, c'est-à-dire au niveau de la mer (SLS, de l'anglais pour « Sea Level Static »), et le deuxième lorsque l'altitude H est supérieure au niveau de la mer, par exemple à 6 000 m d'altitude. La vitesse de rotation $N_{GG}$ est exprimée en pourcentage d'une vitesse nominale du générateur de gaz 104. Cette vitesse nominale est généralement une vitesse haut régime de l'arbre de compresseur 112 prise comme référence.

Comme cela est visible sur la figure 5, les courbes A, B de charge aérodynamique sont « en cloche », c'est-à-dire que, pour chacune, la charge aérodynamique $\Omega$ est nulle lorsque la vitesse de rotation $N_{GG}$ est nulle, augmente ensuite avec la vitesse de rotation $N_{GG}$, atteint un maximum, puis décroît avec la vitesse de rotation $N_{GG}$ pour tendre vers zéro lorsque la vitesse de rotation $N_{GG}$ est élevée, c'est-à-dire s'approche de la vitesse nominale.

Il a été déterminé que la chambre de combustion 110 ne peut être allumée que lorsque la charge aérodynamique $\Omega$ est inférieure à une certaine limite d'allumage L. Cette limite dépend de la charge aérodynamique et du débit d'air $W_{32}$ entrant dans la chambre de combustion 110, le débit d'air pouvant être ramené à la vitesse de rotation $N_{GG}$ de l'arbre de compresseur 112.

Du fait de leur forme en cloche, chacune des courbes A et B passe au-dessus de la limite d'allumage L à un premier seuil n1, puis repasse dessous à un deuxième seuil n2. Entre ces deux seuils n1, n2, la courbe reste au-dessus de la limite d'allumage L, ce qui indique une impossibilité d'allumer la chambre de combustion 110. En revanche, la chambre de combustion 110 peut être allumée pour une vitesse de rotation $N_{GG}$ de l'arbre de compresseur 112 inférieure au seuil n1 ou supérieure au seuil n2.

Ainsi, la turbine à gaz 102 est conçue pour permettre l'allumage de la chambre de combustion 110 sur chacune des plages P1 = (environ 0 %, n1) et P3 = (n2, 100 %). Au contraire, la turbine à gaz 102 est conçue telle que l'allumage n'est pas possible sur la plage P2 (n1, n2). Le seuil n1 marque une borne supérieure de la première plage d'allumage P1 = (environ 0%, n1), tandis que le seuil n2 marque une borne inférieure de la deuxième plage d'allumage P3 = (n2, 100%).

La figure 5 montre également que ces seuils n1, n2 peuvent varier selon l'environnement atmosphérique de la turbine à gaz 102. La comparaison de la courbe A avec la courbe B montre que le seuil n1 diminue avec l'altitude H de sorte que n1(A) > n1(B) et que le seuil n2 augmente avec l'altitude de sorte que n2(A) < n2(B). Autrement dit, la plage P2 = (n1, n2) sur laquelle l'allumage de la chambre de combustion 110 n'est pas possible, est plus étendue en altitude qu'au niveau de la mer.

Par ailleurs, il a été déterminé que, pour un écart à la température ISA à l'altitude H considérée, la plage P2 (n1, n2) sur laquelle l'allumage n'est pas possible est plus étendue avec une température inférieure à la température ISA à cette altitude.

Le seuil n1 est généralement au plus égal à 30 % de la vitesse nominale, tandis que le seuil n2 est généralement au moins égal à 40 % de la vitesse nominale, et plus particulièrement généralement au moins égal à 50 % de la vitesse nominale.

Ainsi, à une étape 202, pour au moins un environnement atmosphérique dans lequel la turbine à gaz 102 est supposée fonctionner, les seuils n1 et n2 sont déterminés, par exemple par simulation numérique de la turbine à gaz 102, ou bien par des essais de cette dernière.

Par exemple, pour chaque environnement atmosphérique, un débit d'air de plus en plus élevé est envoyé par un appareil dédié dans la chambre de combustion 110 (le compresseur n'est pas utilisé et peut être détaché de la chambre de combustion 110), tandis que des tentatives d'allumage de la chambre de combustion 110 sont réalisées. Cela permet de connaître les plages de débit d'air où l'allumage est possible. Or, la relation entre la vitesse de rotation $N_{GG}$ de l'arbre de compresseur 112 qui permettra d'obtenir chaque valeur de débit d'air est connue, ce qui permet de déduire les plages P1, P2, P3 et donc les seuils n1, n2 à partir des plages de débit d'air.

Alternativement, à cette étape 202, la courbe de charge aérodynamique $\Omega$ est déterminée, par exemple par simulation ou essai comme précédemment, et comparée à la limite d'allumage L prédéterminée, pour déterminer les seuils n1, n2.

De préférence, les seuils n1 et n2 sont déterminés pour plusieurs environnements atmosphériques.

À une étape 204, les seuils n1 et n2 sont enregistrés dans la mémoire 124 du dispositif de commande 106, en association avec l'environnement atmosphérique pour lequel ils ont été déterminés.

Par exemple, une table est enregistrée dans le dispositif de commande 106, cette table indiquant pour chacune de plusieurs altitudes H, les seuils n1 et n2 associés :

[Tableau 1]

| Conditions atmosphériques extérieures | premier seuil n1 | deuxième seuil n2 |
|---|---|---|
| ISA, altitude H = 0 | n1(A) | n2(A) |
| ISA, altitude H = une valeur supérieure à 0 | n1(B) | n2(B) |

Dans le cas où l'écart entre la température ISA et la température extérieure T0 mesurée est pris en compte, la table peut indiquer les seuils n1 et n2 pour plusieurs altitudes H et à chaque fois pour plusieurs écarts à la température ISA à l'altitude H considérée.

De la sorte, le dispositif de commande 106 connait, pour plusieurs altitudes H et, le cas échéant pour plusieurs écarts à la température ISA, les plages de vitesses de rotation $N_{GG}$ sur lesquelles la chambre de combustion 110 est apte ou inapte à s'allumer.

Alternativement, la table pourrait être remplacée par une fonction reliant les seuils n1, n2 au(x) paramètre(s) d'environnement atmosphérique (l'altitude H ou bien l'altitude H et l'écart à la température ISA dans l'exemple décrit).

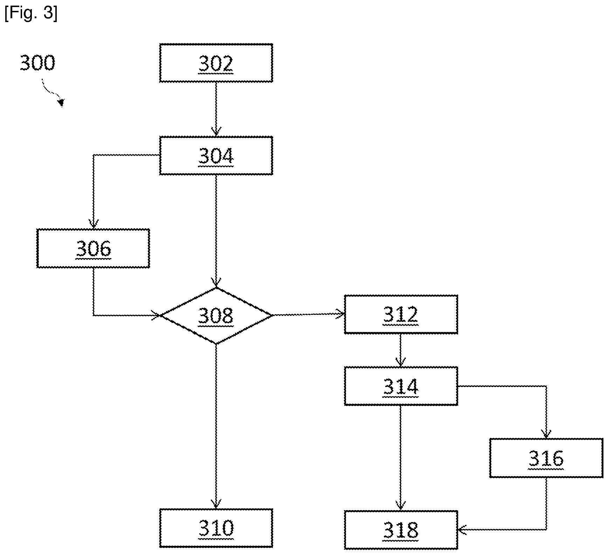

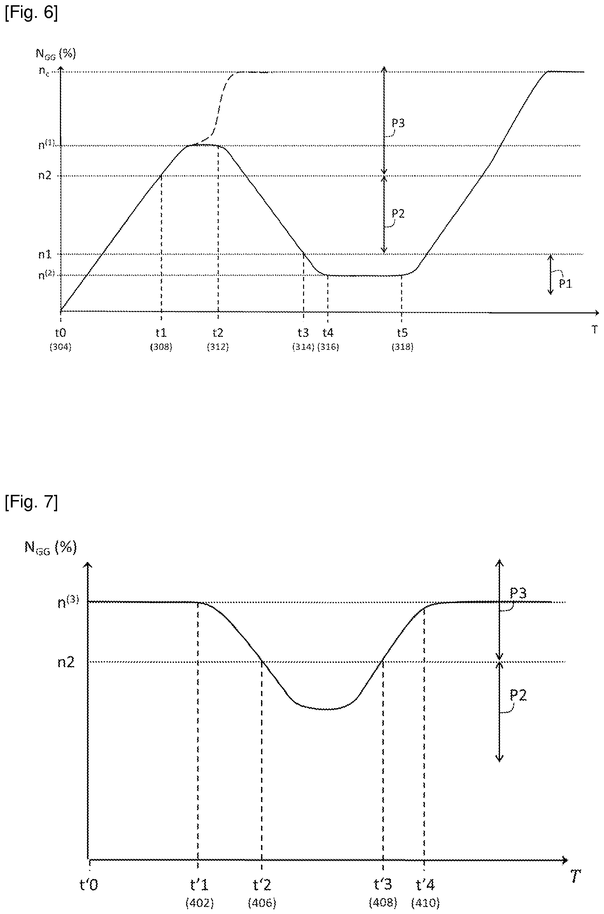

Les figures 3 et 6 illustrent un premier exemple de procédé 300 de démarrage de la turbine à gaz 102. Dans cet exemple, la turbine à gaz 102 est initialement supposée à l'arrêt, avec la chambre de combustion 110 éteinte.

À une étape 302, le dispositif de commande 106 obtient les seuils n1 et n2. Par exemple, le système de mesure 120 mesure le ou les paramètres d'environnement atmosphérique de la turbine à gaz 102. Dans l'exemple décrit, l'altitude H est mesurée, ainsi que, le cas échéant, la température extérieure T0 pour connaître l'écart à la température ISA à l'altitude H. Le dispositif de commande 106 détermine alors les seuils n1, n2 à partir du ou des paramètres d'environnement mesurés. Dans l'exemple décrit, les seuils n1 et n2 associés aux conditions atmosphériques extérieures mesurées sont récupérés de la table enregistrée.

À une étape 304 (instant t0 sur la figure 6), le dispositif de commande 106 active le démarreur électrique 114 pour que ce dernier fournisse un couple d'entraînement à l'arbre de compresseur 112 et accélère ce dernier, par exemple avec une accélération constante.

À une étape 306, le dispositif de commande 106 commande l'injecteur 116 pour injecter le combustible dans la chambre de combustion 110. Cette étape peut par exemple être réalisée à partir du moment où 90% de la valeur du seuil n2 est atteint. simultanément, le dispositif de commande 106 peut commander au dispositif d'allumage 108 de s'activer de sorte que celui-ci soit prêt à fonctionner dès le franchissement du seuil n2.

À une étape 308 (instant t1 sur la figure 6), le dispositif de commande 106 détecte que la vitesse de rotation $N_{GG}$ de l'arbre de compresseur 112 franchit le seuil n2 et, en réponse, commande le dispositif d'allumage 108 pour tenter l'allumage de la chambre de combustion 110. Plusieurs tentatives d'allumage peuvent être réalisées. Pendant ce temps, la vitesse de rotation $N_{GG}$ de l'arbre de compresseur 112 augmente jusqu'à une vitesse de rotation maximale $n^{(1)}$ à laquelle le démarreur électrique 114 seul peut entraîner l'arbre de compresseur 112. Elle sera appelée par la suite vitesse maximale d'assistance $n^{(1)}$.

En cas de réussite de l'allumage, le générateur de gaz 104 démarre à une étape 310 et la turbine 111 entraîne l'arbre de compresseur 112 de sorte que sa vitesse de rotation $N_{GG}$ augmente jusqu'à atteindre une vitesse de rotation $n_c$ dite de consigne de fin de démarrage (portion de courbe en pointillés sur la figure 6).

Après démarrage du générateur de gaz 104, l'assistance par le démarreur électrique 114 n'est plus nécessaire. Le dispositif de commande 106 peut alors désactiver le démarreur électrique 114 pour cesser de fournir un couple à l'arbre de compresseur 112 ou bien, alternativement, poursuivre l'assistance à l'arbre de compresseur 112 jusqu'à atteindre une vitesse dite de coupure à partir de laquelle la turbine 111 assure seule la rotation de l'arbre de compresseur 112, la vitesse de coupure étant inférieure à la vitesse de consigne de fin de démarrage.

En cas d'échec de l'allumage de la chambre de combustion 110 à l'étape 308, par exemple si le dispositif de commande 106 détecte que la vitesse de rotation $N_{GG}$ se maintient un certain temps prédéfini à la vitesse maximale d'assistance $n^{(1)}$ sans allumage de la chambre de combustion 110, le dispositif de commande 106 met de préférence en œuvre un démarrage de seconde chance à bas régime, dans la première plage d'allumage P1. Les chances de démarrage sont ainsi améliorées.

Pour cela, à une étape 312 (instant t2 sur la figure 6), le dispositif de commande 106 commande le démarreur électrique 114 pour cesser d'entraîner l'arbre de compresseur 112, afin que la vitesse de rotation $N_{GG}$ diminue jusqu'à la première plage d'allumage P1. Par exemple, le dispositif de commande 106 commande le démarreur électrique 114 en mode générateur pour prélever du couple à l'arbre de compresseur 112 et ainsi décélérer ce dernier. L'utilisation du démarreur électrique 114 permet une décélération rapide. Alternativement, la décélération peut être libre, c'est-à-dire que le dispositif de commande 106 peut désactiver le démarreur électrique 114 pour que ce dernier n'agisse pas sur l'arbre de compresseur 112.

À une étape 314 (instant t3 sur la figure 6), le dispositif de commande 106 détecte que la vitesse de rotation $N_{GG}$ franchit le seuil n1 et, en réponse, commande le dispositif d'allumage 108 pour tenter l'allumage de la chambre de combustion 110 dans la première plage d'allumage P1.

À une étape 316 (instant t4 sur la figure 6), le dispositif de commande 106 commande le démarreur électrique 114 pour stabiliser la vitesse de rotation $N_{GG}$ de l'arbre de compresseur 112 à une vitesse $n^{(2)}$ comprise dans la première plage d'allumage P1 afin de permettre la poursuite de tentatives d'allumage si l'allumage n'a pas réussi à l'étape 314 ou pour entretenir la flamme dans la chambre de combustion 110 en cas de réussite de l'allumage à l'étape 314.

À une étape 318 (instant t5 sur la figure 6), alors que la chambre de combustion 110 est allumée, le dispositif de commande 106 peut continuer à commander le démarreur électrique 114 pour poursuivre l'assistance à l'arbre de compresseur 112 jusqu'à atteindre la vitesse de coupure à partir de laquelle la turbine 111 assure seule la rotation de l'arbre de compresseur 112. Le dispositif de commande 106 désactive par exemple le démarreur électrique 114 en réponse à la détection de cette vitesse de coupure. La turbine 111 poursuit alors l'accélération de l'arbre de compresseur jusqu'à la vitesse de consigne $n_c$ de fin de démarrage.

En référence aux figures 4 et 7, un deuxième exemple de procédé 400 de démarrage de la turbine à gaz 102 va à présent être décrit. Dans ce deuxième exemple, le démarrage suit une extinction non souhaitée de la chambre de combustion 110 à haut régime.

Dans un tel cas, au moment de l'extinction, la vitesse de rotation $N_{GG}$ de l'arbre de compresseur 112 est généralement élevée et se situe par exemple (comme illustré sur la figure 7) dans la deuxième plage d'allumage P3, au-dessus du seuil n2.

Ainsi, à une étape 402 (instant t'1 sur la figure 7), une extinction de la chambre de combustion 110 survient et la vitesse de rotation $N_{GG}$ de l'arbre de compresseur 112 commence à diminuer.

Cette décélération est par exemple libre, c'est-à-dire que le démarreur électrique 114 est inactif.

Le procédé 400 comporte alors l'étape 302 décrite précédemment d'obtention du seuil n2. Par exemple, le seuil n2 est obtenu à partir du ou des paramètres d'environnement mesurés, et plus précisément de l'altitude H ou bien de l'altitude H et de l'écart à la température ISA dans l'exemple décrit.

À une étape 404 optionnelle, le dispositif de commande 106 commande le dispositif d'allumage 108 pour tenter de rallumer au moins une fois la chambre de combustion 110 avant d'atteindre le seuil n2.

À une étape 406 (instant t'2 sur la figure 7), le seuil n2 est franchi et la chambre de combustion 110 n'est plus apte à s'allumer. Le dispositif de commande 106 détecte ce franchissement et active alors en réponse le démarreur électrique 114 pour fournir du couple à l'arbre de compresseur 112. Cela permet de limiter la baisse de la vitesse de rotation $N_{GG}$ de l'arbre de compresseur 112, puis d'augmenter cette vitesse de rotation $N_{GG}$ pour atteindre la deuxième plage d'allumage P3.

À une étape 408 (instant t'3 sur la figure 7), la vitesse de rotation $N_{GG}$ de l'arbre de compresseur 112 franchit le seuil n2, ce que le dispositif de commande 106 détecte pour commander, en réponse, le dispositif d'allumage 108 pour tenter l'allumage de la chambre de combustion 110 le plus rapidement possible après le franchissement du seuil n2.

À une étape 410 (instant t'4 sur la figure 7), suite à l'allumage de la chambre de combustion 110, le dispositif de commande 106 détecte que le générateur de gaz 104 est autonome. L'assistance du démarreur électrique 114 n'est alors plus nécessaire et le dispositif de commande 106 désactive alors le démarreur électrique 114.

Un tel démarrage permet un rallumage rapide de la chambre de combustion 110 après son extinction. Cela permet un gain de temps pour le redémarrage de la turbine à gaz 102, par rapport au cas où il faudrait faire diminuer la vitesse de rotation $N_{GG}$ de l'arbre de compresseur 112 jusqu'à la première plage d'allumage P1 pour y réaliser le redémarrage.

Dans certains modes de réalisation, le dispositif de commande 106 peut préalablement vérifier la quantité d'énergie disponible dans le dispositif de stockage électrique 118, par exemple lors d'un arrêt programmé de la turbine à gaz 102. Dans le cas où l'énergie disponible est insuffisante pour permettre un démarrage à haut régime (c'est-à-dire dans la deuxième plage d'allumage P3) comme décrit précédemment, le dispositif de commande 106 peut commander la recharge du dispositif de stockage électrique 118, par exemple depuis un générateur embarqué (non représenté) conçu pour générer de l'énergie électrique à bord d'un aéronef, avant l'arrêt de la turbine à gaz 102. Ainsi, le dispositif de stockage électrique 118 est capable d'alimenter le démarreur électrique 114 pour un futur démarrage (normal ou bien suite à une extinction inopinée).

Il apparaît clairement qu'un système de propulsion d'un aéronef tel que décrit précédemment permet de réduire le temps de démarrage en s'affranchissant d'une phase de stabilisation de la vitesse de rotation $N_{GG}$ pour permettre l'activation de différents équipements d'allumage.

Le système de propulsion décrit ci-dessus présente également l'avantage d'améliorer les chances de démarrage de la turbine à gaz en permettant l'allumage de la chambre de combustion sur une plage de basses vitesses après un échec d'une tentative d'allumage sur une plage de hautes vitesses.

Un autre avantage est de permettre un rallumage rapide de la chambre de combustion après son extinction lorsque la vitesse de rotation est encore proche ou comprise dans la plage des hautes vitesses. On comprend que cela permet un gain de temps pour le redémarrage de la turbine à gaz.

Un autre avantage est de permettre une amélioration de la fiabilité et la reproductibilité du démarrage. En effet, les problématiques d'opérabilité comme par exemple les risques de sur-températures, qui peuvent impacter la durée de vie des parties chaudes du moteur, sont supprimés. Les risques des sur-températures peuvent être entre autres liés à une accumulation de carburant dans la chambre de combustion avant la réussite de l'allumage. Dans le cadre de l'invention, le débit d'air est élevé lorsque l'allumage est tenté, ce qui permet une évacuation rapide du carburant de la chambre de combustion où il n'a pas le temps de s'accumuler.

On notera par ailleurs que l'invention n'est pas limitée aux modes de réalisation décrits précédemment. Il apparaîtra en effet à la personne du métier que diverses modifications peuvent être apportées aux modes de réalisation décrits ci-dessus, à la lumière de l'enseignement qui vient de lui être divulgué.

Par exemple, les seuils utilisés pourraient être constants, et ainsi ne pas dépendre de paramètres d'environnement atmosphérique de la turbine à gaz. Ainsi, le dispositif de commande utiliserait en particulier une seule valeur du seuil n1 et une seule valeur du seuil n2. Par exemple, ces valeurs seraient prises dans le cas le plus défavorable, par exemple à une altitude maximale que l'aéronef est conçu pour atteindre. Ainsi, ces seuils constants pourraient être utilisés dans toutes les situations, en particulier aussi bien pour un démarrage à l'arrêt que pour un redémarrage suite à une extinction intempestive de la chambre de combustion en plein vol.

**Revendications**

1. Système de propulsion (100) d'un aéronef comportant :

   - une turbine à gaz (102) comprenant : une chambre de combustion (110), un dispositif d'allumage (108) de la chambre de combustion (110), un compresseur (113) d'alimentation en air de la chambre de combustion (110), le compresseur (113) étant muni d'un arbre de compresseur (112), et un démarreur électrique (114) d'entraînement de l'arbre de compresseur (112), la turbine à gaz (102) étant conçue de sorte que la chambre de combustion (110) puisse être allumée par le dispositif d'allumage (108) dans une première plage d'allumage (P1) de vitesses de rotation de l'arbre de compresseur (112) ;
   - un dispositif de commande (106) de démarrage conçu pour : alors que la chambre de combustion (110) est éteinte, commander le démarreur électrique (114) pour accélérer l'arbre de compresseur (112), et avec l'arbre de compresseur (112) accéléré, commander le dispositif d'allumage (108) pour tenter un allumage de la chambre de combustion (110) ;

**caractérisé en ce que**, la turbine à gaz (102) étant conçue de sorte que la chambre de combustion (110) puisse en outre être allumée par le dispositif d'allumage (108) dans une deuxième plage d'allumage (P3) de vitesses de rotation de l'arbre de compresseur (112), supérieure à la première plage d'allumage (P1), mais pas entre ces deux plages d'allumage (P1, P3), le dispositif de commande (106) est conçu, lors de l'accélération de l'arbre de compresseur (112), pour accélérer ce dernier jusqu'à la deuxième plage d'allumage (P3) pour tenter l'allumage de la chambre de combustion (110) dans cette dernière.

2. Système de propulsion (100) selon la revendication 1, dans lequel la deuxième plage d'allumage (P3) présente une borne inférieure (n2) au moins égale à 40% d'une vitesse nominale de rotation de l'arbre de compresseur (112).

3. Système de propulsion (100) selon la revendication 2, dans lequel la première plage d'allumage (P1) présente une borne supérieure (n1) valant au plus 30% de la vitesse nominale de rotation de l'arbre de compresseur (112).

4. Système de propulsion (100) selon l'une quelconque des revendications 1 à 3, dans lequel le dispositif de commande (106) est conçu, en cas d'échec de la tentative d'allumage, pour :

- faire décélérer l'arbre de compresseur (112), jusqu'à atteindre la première plage d'allumage (P1) ; et
- avec la vitesse de rotation ($N_{GG}$) dans la première plage (P1), commander le dispositif d'allumage (108) pour tenter un allumage de la chambre de combustion (110).

5. Système de propulsion (100) selon l'une quelconque des revendications 1 à 4, dans lequel le dispositif de commande (106) est conçu pour commander le démarreur électrique (114) et le dispositif d'allumage (108) en réponse à une extinction de la chambre de combustion (110) et à la détection que la vitesse de rotation ($N_{GG}$) passe en-dessous de la deuxième plage d'allumage (P3).

6. Système de propulsion (100) selon l'une quelconque des revendications 1 à 5, dans lequel le dispositif de commande (106) est configuré pour déterminer une borne inférieure (n2) de la deuxième plage d'allumage (P3) à partir d'au moins un paramètre mesuré d'environnement atmosphérique de la turbine à gaz (102).

7. Aéronef comprenant un système de propulsion (100) selon l'une quelconque des revendications 1 à 6.

8. Procédé (300 ; 400) de démarrage d'une turbine à gaz (102) d'un aéronef, comportant :

- alors qu'une chambre de combustion (110) de la turbine à gaz (102) est éteinte, la commande (304 ; 406) d'un démarreur électrique (114) de la turbine à gaz pour accélérer un arbre de compresseur (112) entraînant un compresseur (113) d'alimentation en air de la chambre de combustion (110) ; et
- avec l'arbre de compresseur (112) accéléré, la commande (308 ; 408) d'un dispositif d'allumage (108) de la turbine à gaz (102) pour tenter un allumage de la chambre de combustion (110) ;

**caractérisé en ce que**, la turbine à gaz (102) étant conçu de sorte que la chambre de combustion (110) puisse être allumée par le dispositif d'allumage (108) dans une première page d'allumage (P1) et dans une deuxième plage d'allumage (P3) de vitesses de rotation de l'arbre de compresseur (112), la deuxième plage d'allumage (P3) étant supérieure à la première plage d'allumage (P1), mais pas entre ces deux plages d'allumage (P1, P3), l'arbre de compresseur (112) est accéléré jusqu'à la deuxième plage d'allumage (P3) pour tenter l'allumage de la chambre de combustion (110) dans cette dernière.

9. Procédé (300 ; 400) selon la revendication 8, dans lequel une borne inférieure (n2) de la deuxième plage d'allumage (P3) est préalablement déterminée par essai sur la turbine à gaz (102) ou bien par simulation de la turbine à gaz (102).

10. Programme d'ordinateur (128) téléchargeable depuis un réseau de communication et/ou enregistré sur un support lisible par ordinateur, **caractérisé en ce qu'**il comprend des instructions pour l'exécution d'un procédé de démarrage (300, 400) selon la revendication 9, lorsque le programme d'ordinateur (128) est exécuté dans un dispositif de commande (106) selon la revendication 1.

**Patentansprüche**

1. Antriebssystem (100) eines Flugzeugs, umfassend:

   - eine Gasturbine (102), umfassend: eine Verbrennungskammer (110), eine Zündvorrichtung (108) der Verbrennungskammer (110), einen Kompressor (113) zur Luftversorgung der Verbrennungskammer (110), wobei der Kompressor (113) mit einer Kompressorwelle (112) ausgestattet ist, und einen elektrischen Starter (114) zum Antrieb der Kompressorwelle (112), wobei die Gasturbine (102) derart gestaltet ist, dass die Verbrennungskammer (110) von der Zündvorrichtung (108) in einem ersten Zündbereich (P1) für Drehzahlen des Kompressors (112) angezündet werden kann;
   - eine Startsteuereinheit (106), die gestaltet ist, um: während die Verbrennungskammer (110) erloschen ist, den elektrischen Starter (114) zum Beschleunigen der Kompressorwelle (112) zu steuern, und mit der beschleunigten Kompressorwelle (112) die Zündvorrichtung (108) zum Versuchen einer Zündung der Verbrennungskammer (110) zu steuern;

   **dadurch gekennzeichnet, dass** die Gasturbine (102) derart gestaltet ist, dass die Verbrennungskammer (110) weiter von der Zündvorrichtung (108) in einem zweiten Zündbereich (P3) für Drehzahlen der Kompressorwelle (112), der größer ist als der erste Zündbereich (P1), aber nicht zwischen diesen zwei Zündbereichen (P1, P3) gezündet werden kann, die Steuereinheit (106) gestaltet ist, um bei der Beschleunigung der Kompressorwelle (112), diese Letztere bis zum zweiten Zündbereich (P3) zu beschleunigen, um die Zündung der Verbrennungskammer (110) in diesem Letzteren zu versuchen.

2. Antriebssystem (100) nach Anspruch 1, wobei der zweite Zündbereich (P3) einen unteren Grenzwert (n2) mindestens gleich 40% einer nominalen Drehzahl der Kompressorwelle (112) aufweist.

3. Antriebssystem (100) nach Anspruch 2, wobei der erste Zündbereich (P1) einen oberen Grenzwert (n1) aufweist, der höchstens 30% der nominalen Drehzahl der Kompressorwelle (112) beträgt.

4. Antriebssystem (100) nach einem der Ansprüche 1 bis 3, wobei die Steuereinheit (106) gestaltet ist, um im Falle eines Fehlschlags des Zündversuchs:

   - die Kompressorwelle (112) bis zum Erreichen des ersten Zündbereichs (P1) zu verlangsamen; und
   - mit der Drehzahl ($N_{GG}$) im ersten Bereich (P1) die Zündvorrichtung (108) zu steuern, um eine Zündung der Verbrennungskammer (110) zu versuchen.

5. Antriebssystem (100) nach einem der Ansprüche 1 bis 4, wobei die Steuereinheit (106) gestaltet ist, um den elektrischen Starter (114) und die Zündvorrichtung (108) als Reaktion auf ein Erlöschen der Verbrennungskammer (110) und das Erfassen, dass die Drehzahl ($N_{GG}$) unter den zweiten Zündbereich (P3) fällt, zu steuern.

6. Antriebssystem (100) nach einem der Ansprüche 1 bis 5, wobei die Steuereinheit (106) konfiguriert ist, um einen unteren Grenzwert (n2) des zweiten Zündbereichs (P3) mindestens ausgehend von einem gemessenen Parameter der atmosphärischen Umgebung der Gasturbine (102) zu bestimmen.

7. Flugzeug, das ein Antriebssystem (100) nach einem der Ansprüche 1 bis 6 umfasst.

8. Verfahren (300; 400) zum Starten einer Gasturbine (102) eines Flugzeugs, umfassend:

   - während eine Verbrennungskammer (110) der Gasturbine (102) erloschen ist, die Steuerung (304, 406) eines elektrischen Starters (114) der Gasturbine zum Beschleunigen einer Kompressorwelle (112), die einen Kompressor (113) zur Luftversorgung der Verbrennungskammer (110) antreibt; und
   - mit der beschleunigten Kompressorwelle (112), die Steuerung (308, 408) einer Zündvorrichtung (108) der Gasturbine (102), um eine Zündung der Verbrennungskammer (110) zu versuchen;

   **dadurch gekennzeichnet, dass** die Gasturbine (102) derart gestaltet ist, dass die Verbrennungskammer (110) von der Zündvorrichtung (108) in einem ersten Zündbereich (P1) und in einem zweiten Zündbereich (P3) für Drehzahlen der Kompressorwelle (112), wobei der zweite Zündbereich (P3) größer ist als der erste Zündbereich (P1), aber nicht zwischen diesen zwei Zündbereichen (P1, P3) gezündet werden kann, die Kompressorwelle (112) bis zum zweiten Zündbereich (P3) beschleunigt wird, um die Zündung der Verbrennungskammer (110) in diesem Letzteren zu versuchen.

9. Verfahren (300; 400) nach Anspruch 8, wobei ein unterer Grenzwert (n2) des zweiten Zündbereichs (P3) vorab durch Test auf der Gasturbine (102) oder durch Simulation der Gasturbine (102) bestimmt wird.

10. Computerprogramm (128), das von einem Kommunikationsnetzwerk herunterladbar und/oder auf einem computerlesbaren Träger aufgezeichnet ist, **dadurch gekennzeichnet, dass** es Anweisungen für die Ausführung eines Startverfahrens (300, 400) nach Anspruch 9, wenn das Computerprogramm (128) auf einer Steuereinheit (106) nach Anspruch 1 ausgeführt wird, umfasst.

**Claims**

1. A propulsion system (100) for an aircraft comprising:

   - a gas turbine (102) comprising : a combustion chamber (110), an ignition device (108) for igniting the combustion chamber (110), a compressor (113) for supplying air to the combustion chamber (110), the compressor (113) being equipped with a compressor shaft (112), and an electric starter (114) for driving the compressor shaft (112), the gas turbine (102) being designed so that the combustion chamber (110) can be ignited by the ignition device (108) in a first ignition range (P1) of rotational speeds of the compressor shaft (112);
   - a start-up control device (106) designed to: with the combustion chamber (110) switched off, control the electric starter (114) to accelerate the compressor shaft (112), and with the compressor shaft (112) accelerated, control the ignition device (108) to attempt an ignition of the combustion chamber (110);

   **characterised in that**, since the gas turbine (102) is designed in such a way that the combustion chamber (110) can additionally be ignited by the ignition device (108) in a second ignition range (P3) of rotational speeds of the compressor shaft (112) which is greater than the first ignition range (P1), but not between these two ignition ranges (P1, P3), the control device (106) is designed, when the compressor shaft (112) is accelerated, to accelerate the latter up to the second ignition range (P3) in order to attempt to ignite the combustion chamber (110) in the latter.

2. The propulsion system (100) according to claim 1, wherein the second ignition range (P3) has a lower bound (n2) at least equal to 40% of a nominal rotational speed of the compressor shaft (112).

3. The propulsion system (100) as claimed in claim 2, wherein the first ignition range (P1) has an upper bound (n1) of at most 30% of the nominal rotational speed of the compressor shaft (112).

4. The propulsion system (100) according to any one of claims 1 to 3, wherein the control device (106) is designed, in the event of failure of the ignition attempt, to:

   - decelerate the compressor shaft (112) until it reaches the first ignition range (P1); and
   - with the rotational speed ($N_{GG}$) in the first range (P1), control the ignition device (108) to attempt an ignition of the combustion chamber (110).

5. The propulsion system (100) according to any one of claims 1 to 4, wherein the control device (106) is arranged to control the electric starter (114) and the ignition device (108) in response to an extinction of the combustion chamber (110) and to the detection that the rotational speed ($N_{GG}$) falls below the second ignition range (P3).

6. The propulsion system (100) according to any one of claims 1 to 5, wherein the control device (106) is configured to determine a lower bound (n2) of the second ignition range (P3) on the basis of at least one measured parameter of the atmospheric environment of the gas turbine (102).

7. An aircraft comprising a propulsion system (100) according to any one of claims 1 to 6.

8. A method (300; 400) for starting up a gas turbine (102) of an aircraft, comprising:

   - while a combustion chamber (110) of the gas turbine (102) is switched off, controlling (304; 406) an electric starter (114) of the gas turbine to accelerate a compressor shaft (112) driving a compressor (113) supplying air to the combustion chamber (110); and

- with the compressor shaft (112) accelerated, controlling (308; 408) an ignition device (108) of the gas turbine (102) to attempt an ignition of the combustion chamber (110);

**characterised in that**, the gas turbine (102) being designed so that the combustion chamber (110) can be ignited by the ignition device (108) in a first ignition range (P1) and in a second ignition range (P3) of rotational speeds of the compressor shaft (112), the second ignition range (P3) being greater than the first ignition range (P1), but not between these two ignition ranges (P1, P3), the compressor shaft (112) is accelerated to the second ignition range (P3) in order to attempt to ignite the combustion chamber (110) in the latter.

9. The method (300; 400) according to claim 8, wherein a lower bound (n2) of the second ignition range (P3) is previously determined by testing the gas turbine (102) or by simulating the gas turbine (102).

10. A computer program (128) downloadable from a communications network and/or recorded on a computer-readable medium, **characterised in that** it comprises instructions for executing a start-up method (300, 400) according to claim 9, when the computer program (128) is executed in a control device (106) according to claim 1.

[Fig. 1]

[Fig. 2]

[Fig. 3]

300

302

304

306

308

310

312

314

316

318

[Fig. 4]

400

402

302

404

406

408

410

[Fig. 5]

$\Omega$

45

$n1(B)$

$P1(B)$

$P2(B)$

B

$n2(B)$

$P3(B)$

15

$P1(A)$

A

$P2(A)$

$n1(A)$

$n2(A)$

$P3(A)$

L

0

0%          50%          100%

$N_{GG}$ (%)

[Fig. 6]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2995345 A1
- WO 2013007912 A1
- EP 2006496 A1

**Littérature non-brevet citée dans la description**

- **WALSH, P.P.** ; **FLETCHER, P.** Gas Turbine Performance. Blackwell Science, 1998